# EUROPEAN PATENT APPLICATION

(11) **EP 4 760 638 A1**
(43) Date of publication of application: **17.06.2026**
(21) Application number: 24307116.4
(22) Date of filing: 16.12.2024
(51) Int. Cl.: G06T 9/00, H04N 19/597

(54) **PROJECTION OF 3D POINT CLOUDS FOR IMAGE-BASED COMPRESSION OF ATTRIBUTES**

(71) Applicant: InterDigital CE Patent Holdings, SAS, 75017 Paris (FR)
(72) Inventor: MARVIE, Jean-Eudes, 22190 PLERIN (FR); BORBA PINHEIRO, Rodrigo, 35700 RENNES (FR)
(74) Representative: Rittner, Karsten

(57) **Abstract**

Methods, apparatus and data stream are provided for encoding and decoding a three-dimensional (3D) point cloud. The 3D point cloud is processed to obtain a coded geometry, a reconstructed geometry obtained by decoding the coded geometry and adapted attributes. The adapted attributes are obtained by tracking indices of points of the point cloud or by transferring attributes to the reconstructed geometry. The 3D point cloud is divided in a regular grid of blocks, projecting adapted attributes of points of each non-empty block on inner faces of the blocks and selecting one of the inner faces to obtain patches. The patches are packed in an atlas image according to a scanning process and the atlas image is encoded in a data stream with metadata indicating selected inner faces.

## Description

### 1. Technical Field

The present principles generally relate to the domain of encoding, transmitting and decoding 3D point clouds with attributes. In particular, the present principles also relate to methods and devices to encode and decode the attributes of a 3D point cloud as patch atlases.

### 2. Background

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

Dynamic 3D point clouds are a useful way to represent volumetric video. However, the encoding of 3D point clouds with attributes requires a huge amount of data. In the present application, color is often used to illustrate how the attributes are encoded according to the present principles. Color is only an example of attributes, the present principles apply to any kind of per point attributes like normal vectors, transparency, reflectance, haptics, etc. A way to encode geometry and or attributes of a 3D point cloud consists in projecting the points onto 2D surfaces and then encoding the surfaces by using 2D codecs, leveraging high end image or video coding methods. This is, for example, the approach that is used in MPEG V-PCC, using video codec, to encode positions and attributes of PCs. However, with these techniques, some points may be missed (because occulted at the projection step), leading to visual artifacts at the rendering because information is missing. The present principles propose methods and devices to overcome this drawback.

### 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

Methods, apparatus and data stream are provided for encoding and decoding a three-dimensional (3D) point cloud. The 3D point cloud is processed to obtain a coded geometry, a reconstructed geometry obtained by decoding the coded geometry and adapted attributes. The adapted attributes are obtained by tracking indices of points of the point cloud or by transferring attributes to the reconstructed geometry. The 3D point cloud is divided in a regular grid of blocks, projecting adapted attributes of points of each non-empty block on inner faces of the blocks and selecting one of the inner faces to obtain patches. The patches are packed in an atlas image according to a scanning process and the atlas image is encoded in a data stream with metadata indicating selected inner faces. In an embodiment, non-projected adapted attributes are detected and predicted and related residuals are encoded in the data stream.

### 4. Brief Description of Drawings

The present disclosure will be better understood, and other specific features and advantages will emerge upon reading the following description, the description making reference to the annexed drawings wherein:
- **Figure 1A** illustrates a method for encoding a point cloud according to the present principles;
- **Figure 1B** shows a first embodiment of geometry encoding module according to the present principles;
- **Figure 1C****,** shows a second embodiment of geometry encoding module according to the present principles;
- **Figure 2** details attribute encoding module of Figure 1A, according to the present principles;
- **Figure 3** shows an example architecture of a device which may be configured to implement a method for encoding attributes of a point cloud according to embodiments of the present principles;
- **Figure 4** shows an example of an embodiment of the syntax of a stream when the data are transmitted over a packet-based transmission protocol;

### 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

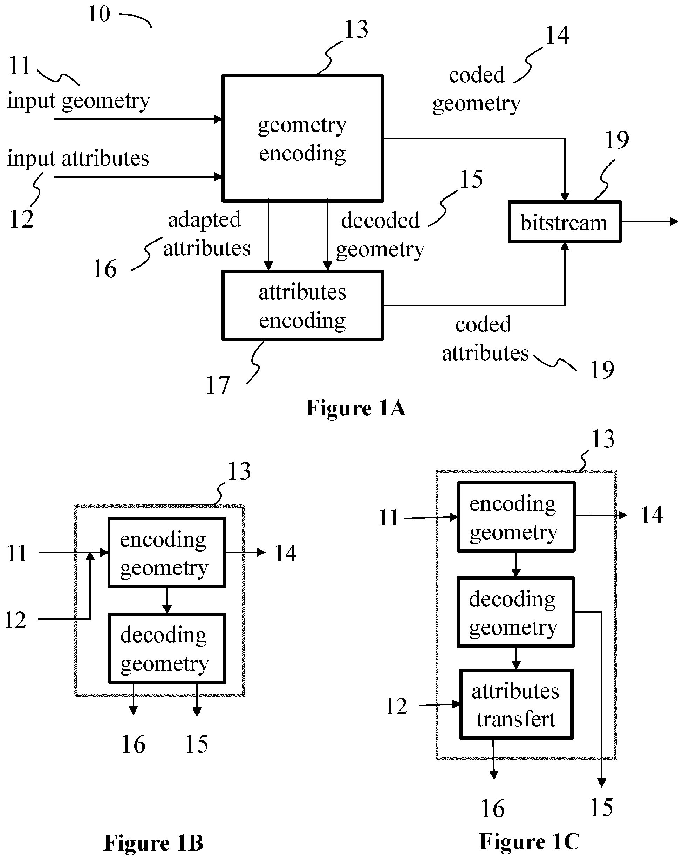

**Figure 1A** illustrates a method 10 for encoding a point cloud according to the present principles. An input 3D point cloud is obtained from a source. The input 3D point cloud comprises an input geometry 11 and input attributes 12. The source may be a memory storage or a stream obtained from a network. At a step 11, the input geometry of the 3D point cloud (that is the coordinates of each point in a frame of reference of the 3D space) and the input attributes (that are, per point, color, normal vector, transparency, etc.) are obtained from the input point cloud and processed so the geometry is encoded to obtain a coded geometry, the coded geometry is decoded to obtain a decoded geometry and the attributes are adapted to obtain adapted attributes. Two embodiments are possible at this last step.

**Figure 1B** shows a first embodiment of geometry encoding module 13 according to the present principles. In this embodiment, input geometry 11 is encoded by a lossless method, that is, point indices are tracked. So, the attributes for each point of the decoded geometry. The adapted attributes 16 are input attributes 12. **Figure 1C****,** shows a second embodiment of geometry encoding module 13 according to the present principles. In this embodiment, input geometry 11 is encoded by a lossy method that shuffle the coordinates of the points. Input attributes 12 are then transferred to the decoded geometry and so, adapted attributes are linked to decoded points as a function of input attributes 12 and correspond to the transferred attributes.

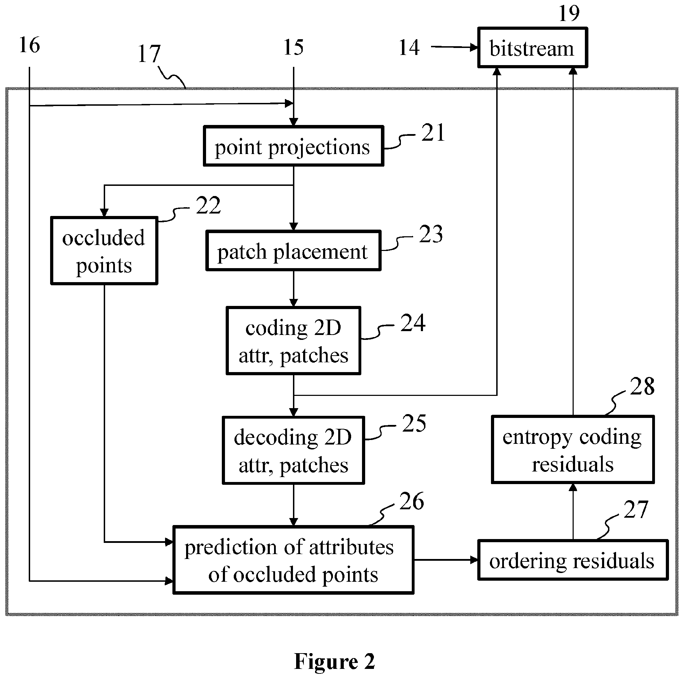

**Figure 2** details attribute encoding module 17 of Figure 1A, according to the present principles. The proposed method is twofold. First, per point attributes are projected on 2D patches and the 2D patches are arranged (also called placed) onto a 2D patch atlas. In an embodiment, the creation and placement of patches are recomputed at the decoding side from coded geometry 15. In this embodiment, metadata describing parameters used for patches are not necessary. The data stream is lighter but computational resources are needed at the decoder. In another embodiment, metadata to retrieve projection parameters for each patch are associated with the patch atlas. Attribute encoding module 17 receives decoded geometry 15 and adapted attributes 16. Second, the present principles comprise methods to handle the attributes of points that are missed during the projection, for example because of occlusion. Missing attributes can be predicted at decoding by using incremental interpolation and an advanced inpainting process can be performed to fill the holes. At the encoding, residuals are computed by using incremental interpolation. The residuals are encoded. Missing attributes are predicted at the decoding by using incremental interpolation. Residuals are decoded and applied to predicted values.

The 3D space of the point cloud is divided in a regular 3D grid of blocks. The empty blocks are discarded. At a step 21, decoded geometry 15 and adapted attributes 16 are projected onto the six inner faces of each non-empty block to obtain 6 images. Even with this six directions projection, some points may be occluded and, so, are projected on one of the six images. At a step 22, these points are detected and stored in memory. In order to perform the processing, the point cloud is read from file as two tables, one of positions quantized in range [0,gridSize[ and one of colors, color of index i in color table be the color of point i in position table. Both tables have the same size. 3D "occupancy" is stored in memory in a table posOcc of size gridSize x gridSize x gridSize. Each value of the table stores the index of the point in the position and in the color table or -1. The following code illustrates the process.

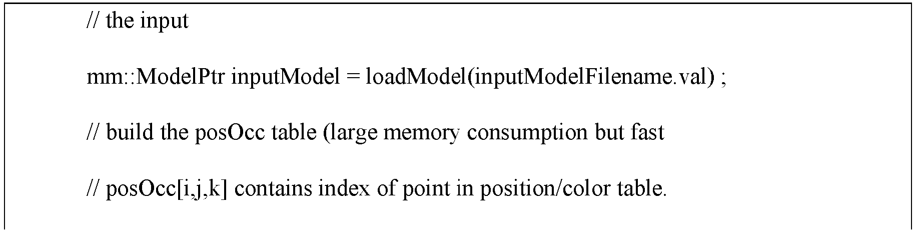

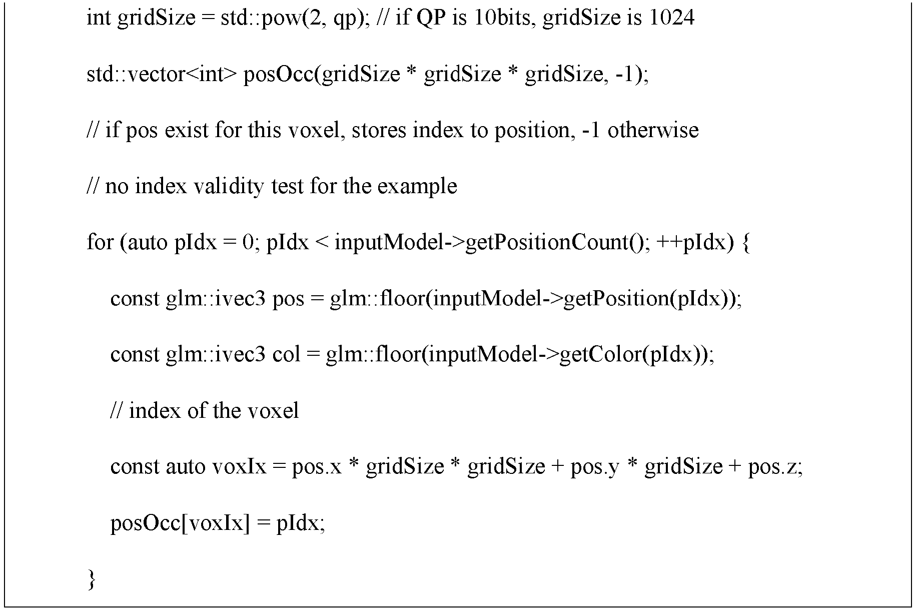

This data structure is memory consuming but allows for O(1) lookups for a voxel i,j,k. Other data structures can be used to get more compact memory such as association maps indexed by i,j,k, in this case lookups would in the order of 3 * o(log( gridSize).

At step 21, patches are generated by projections. An orthogonal projection method to be very fast. The point cloud is constrained to be axis aligned, quantized and cubicle of size gridSize (e.g. 1024x1024x1024, if gridSize=1024) and is decomposed into regular axis aligned cubicle blocks of size blockSize (e.g. 8x8x8 if blockSize=8 or 32x32x32 if blockiIze=32). The blocks that contain no point from the original PC are discarded. For all the other blocks, the points that it contains are orthogonally projected respectively onto the 6 sides of block box. The projection with a maximum of nearest projected points and the smallest average distance to the side is selected and stored as a 2D image of size blockSize x blockSize. The axis/side this image is attached to is also stored as metadata. So, the selected image stores a subset of the colors of the point set contained by the block. Indeed, the patch does not store all the color information of a block due to occlusion issues during the orthogonal projection. The list of point indices that are the source for these projected colors is kept, so, the occluded points can be detected at step 22. The selected image and its associated information constitute a patch. An "occupancy map" is also generated. That is an image of the same size of the color image and store for each pixel if a color exist in the color map or not (this is used latter to fill the empty parts by using a padding algorithm). At the end of the process, a scan going from bottom to top (or top to bottom), of the point cloud, storing for each slice the set of patches is obtained. During step 21, the blocks are processed in a specific order starting from the bottom left corner (or top left) of the point cloud and scanning horizontally each slice of the volume made of blocks. This set of slices is used at step 23 for unrolling and placing the patches, to accelerate the algorithm. A patch is stored in memory in a data structure, presented, for example as a C++ class.

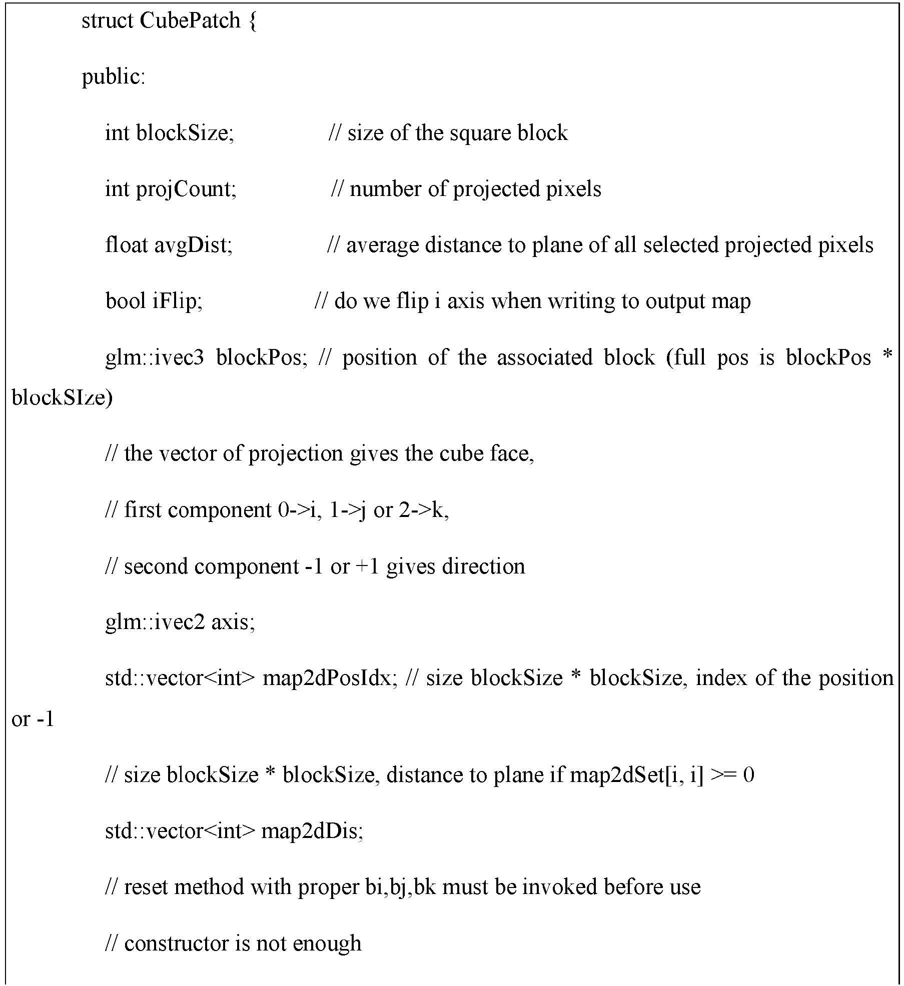

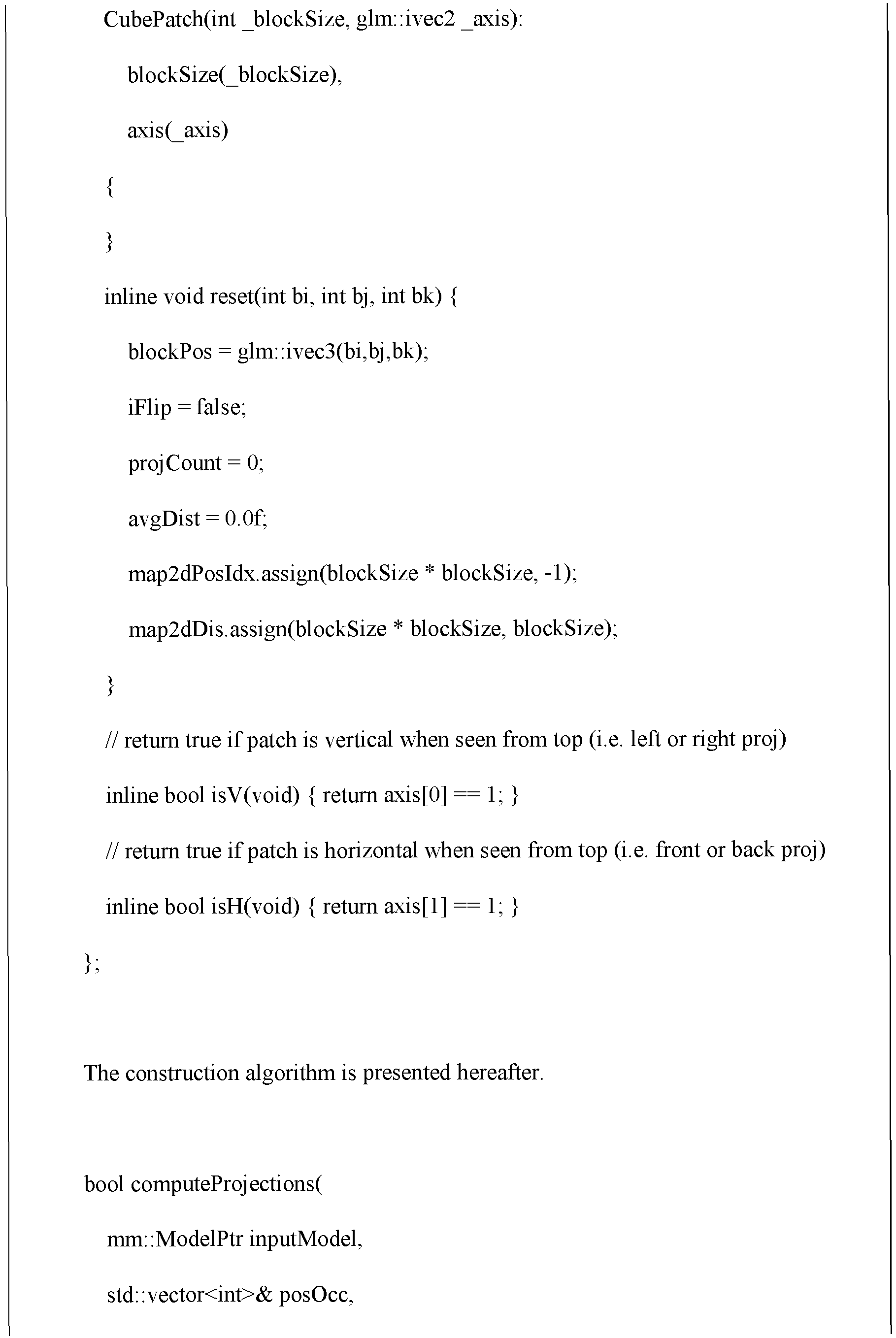

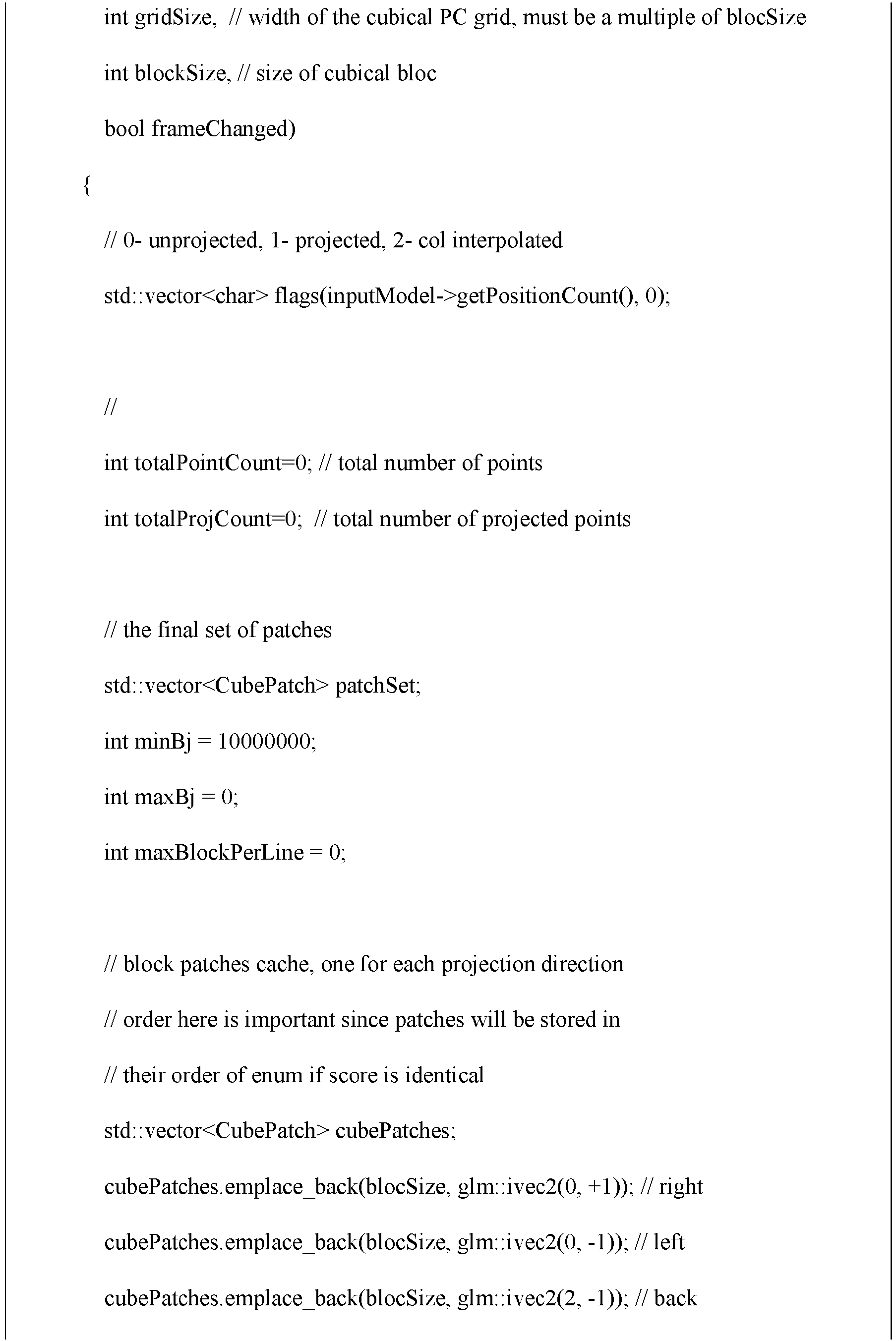

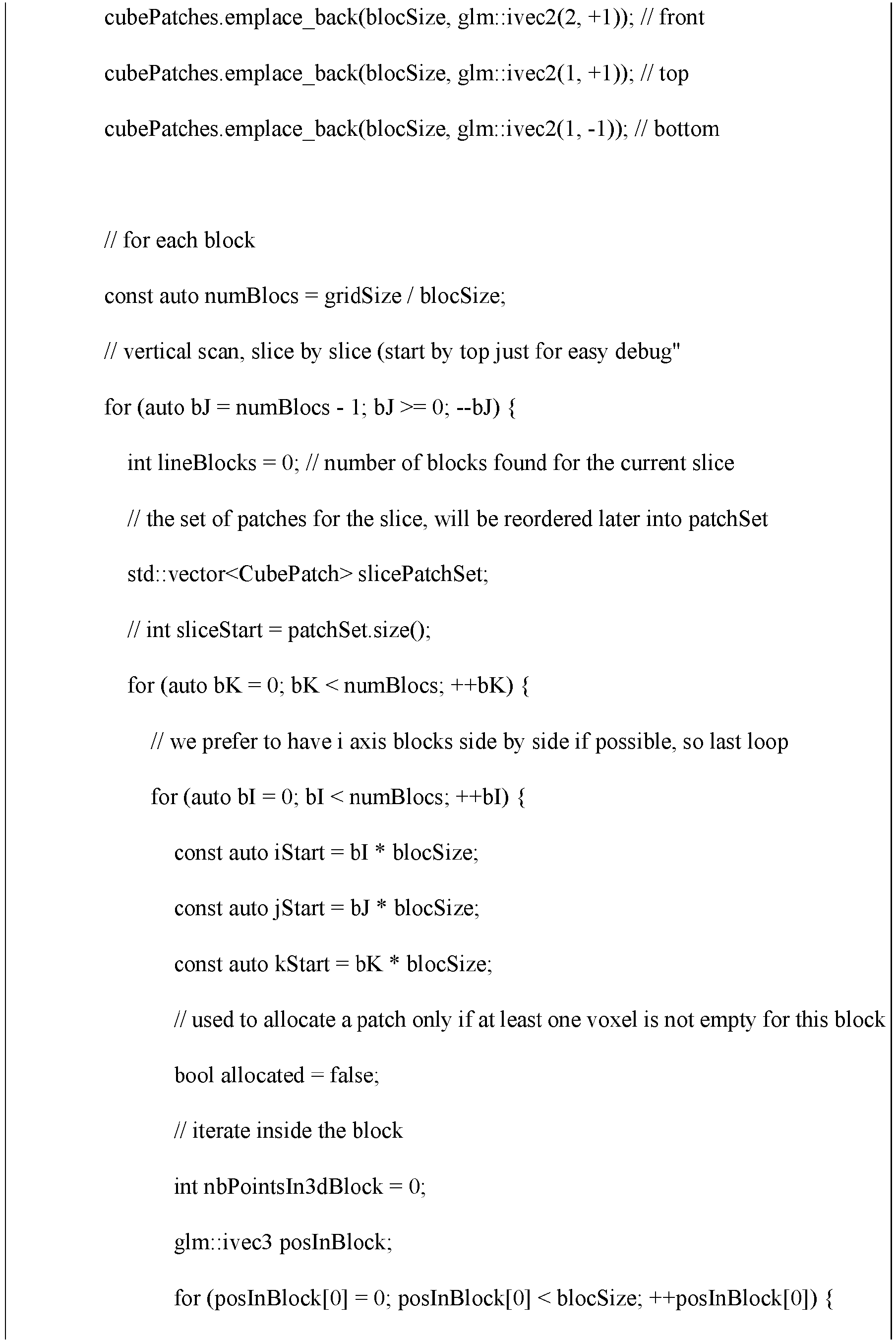

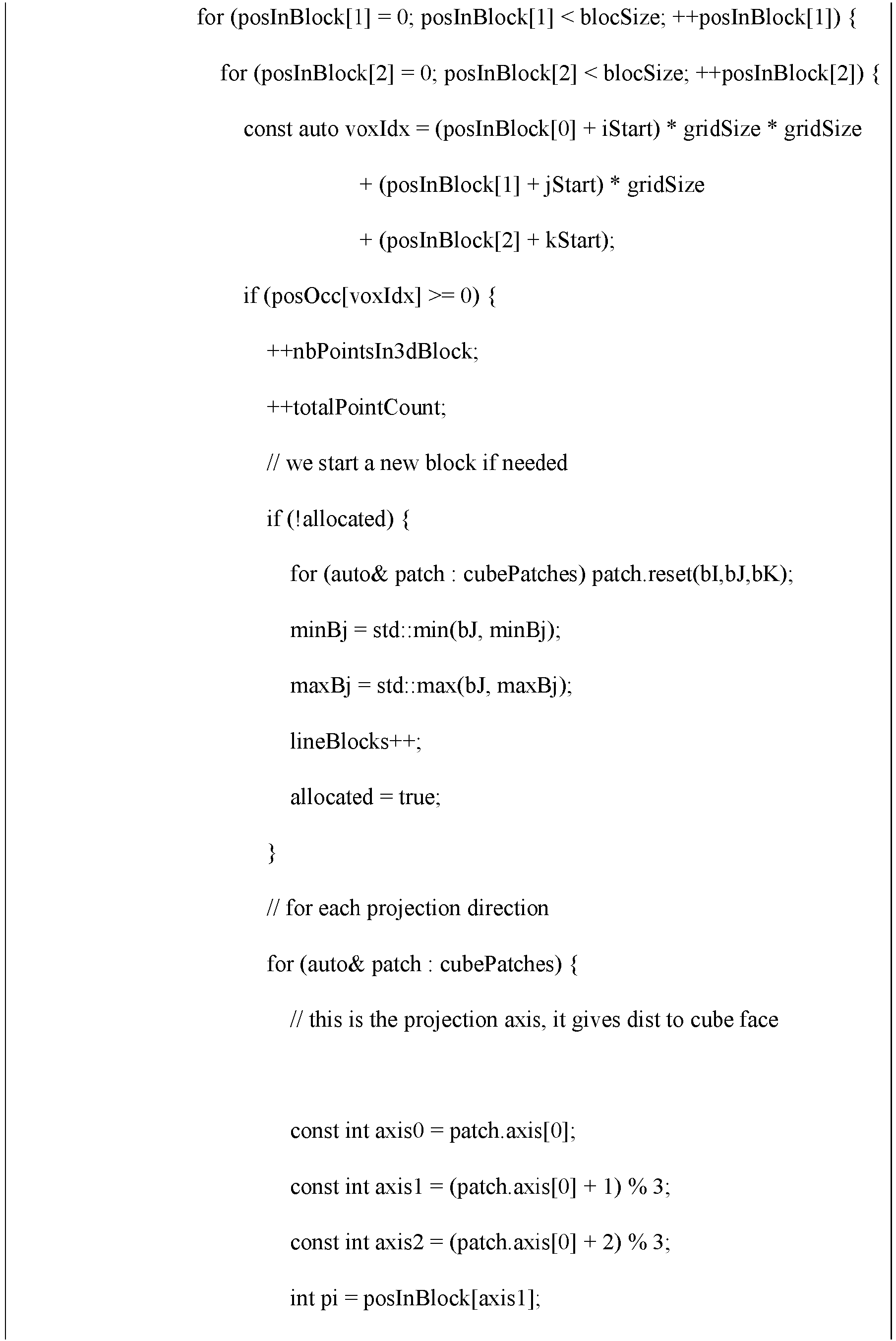

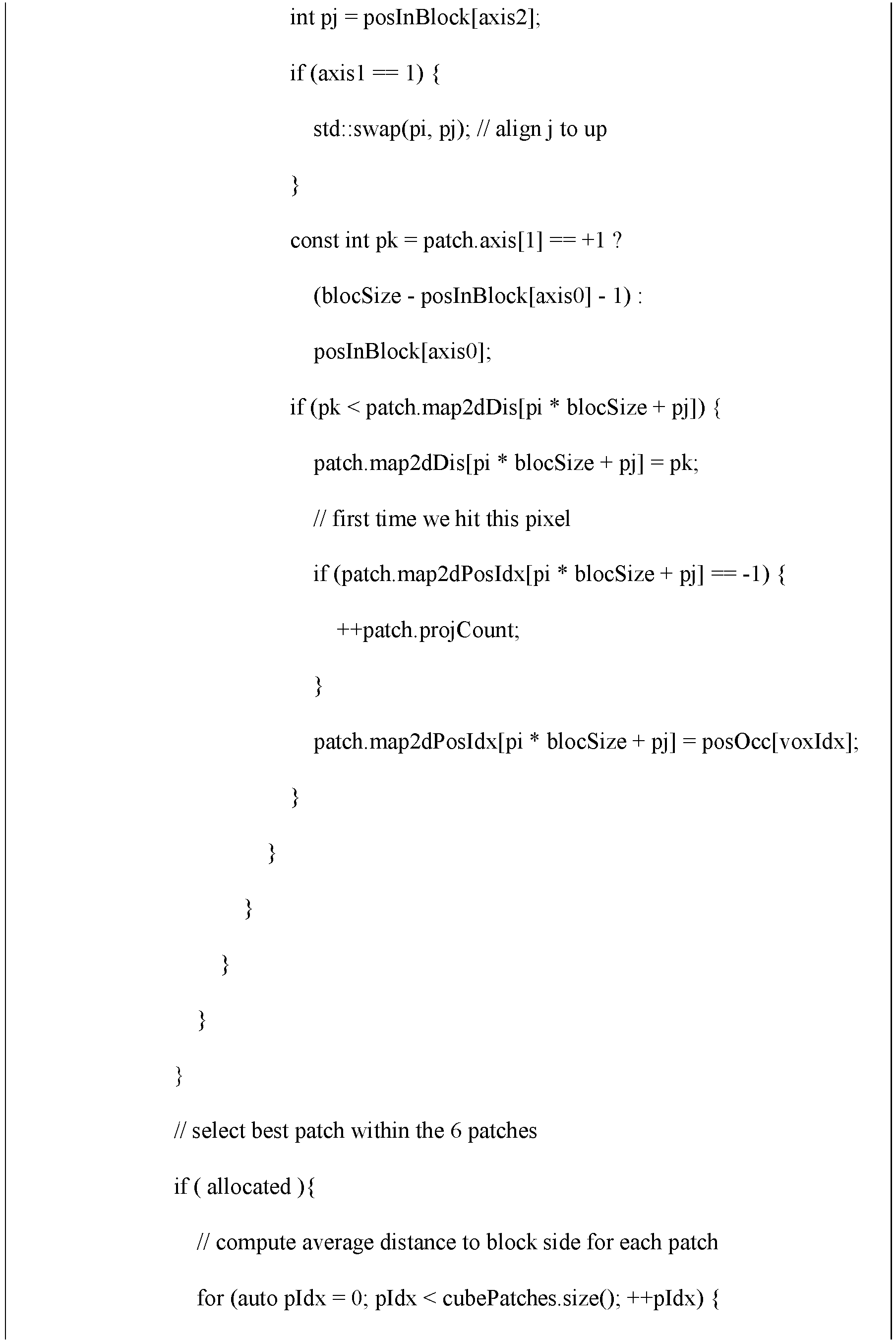

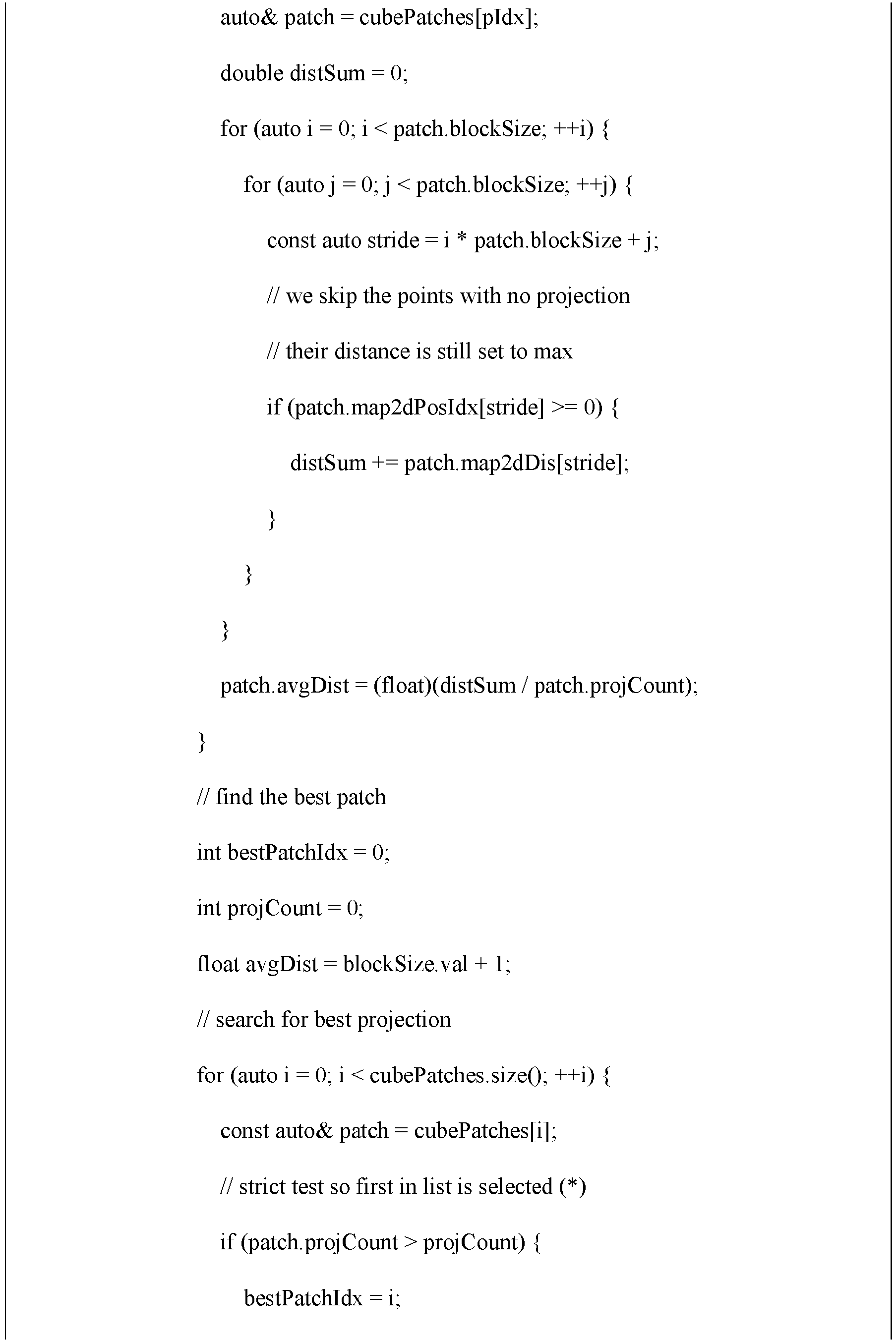

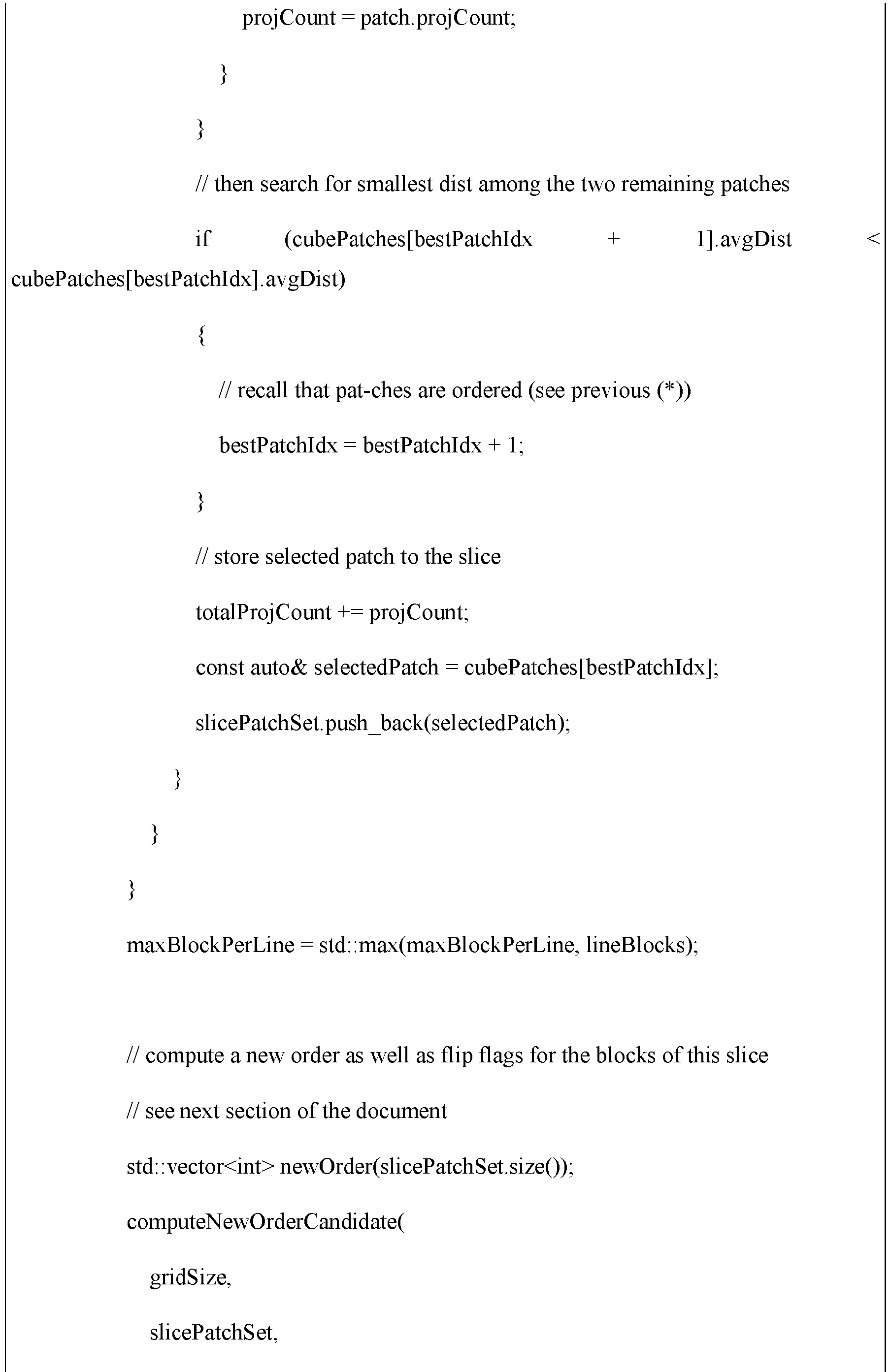

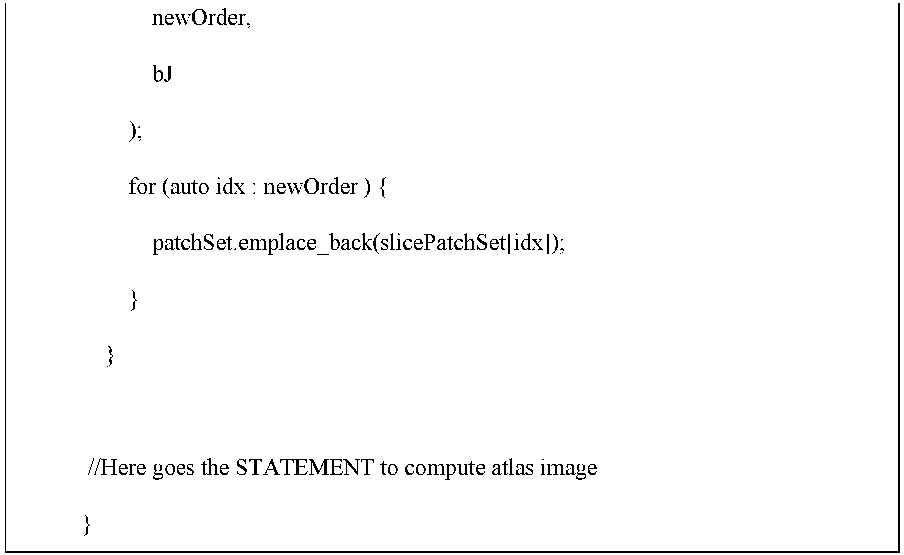

Once all the slices are generated, an atlas image is generated at step 24 by writing the pixels of each patch (and flipping the patch image when needed) in the atlas image (also called final image herein). Step 24 to compute the atlas image is presented hereafter:

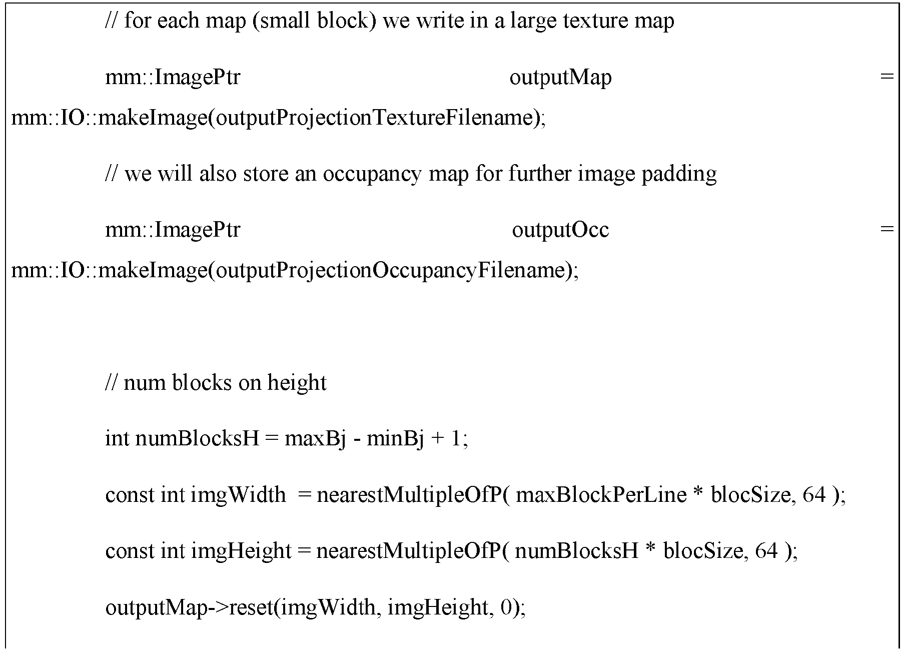

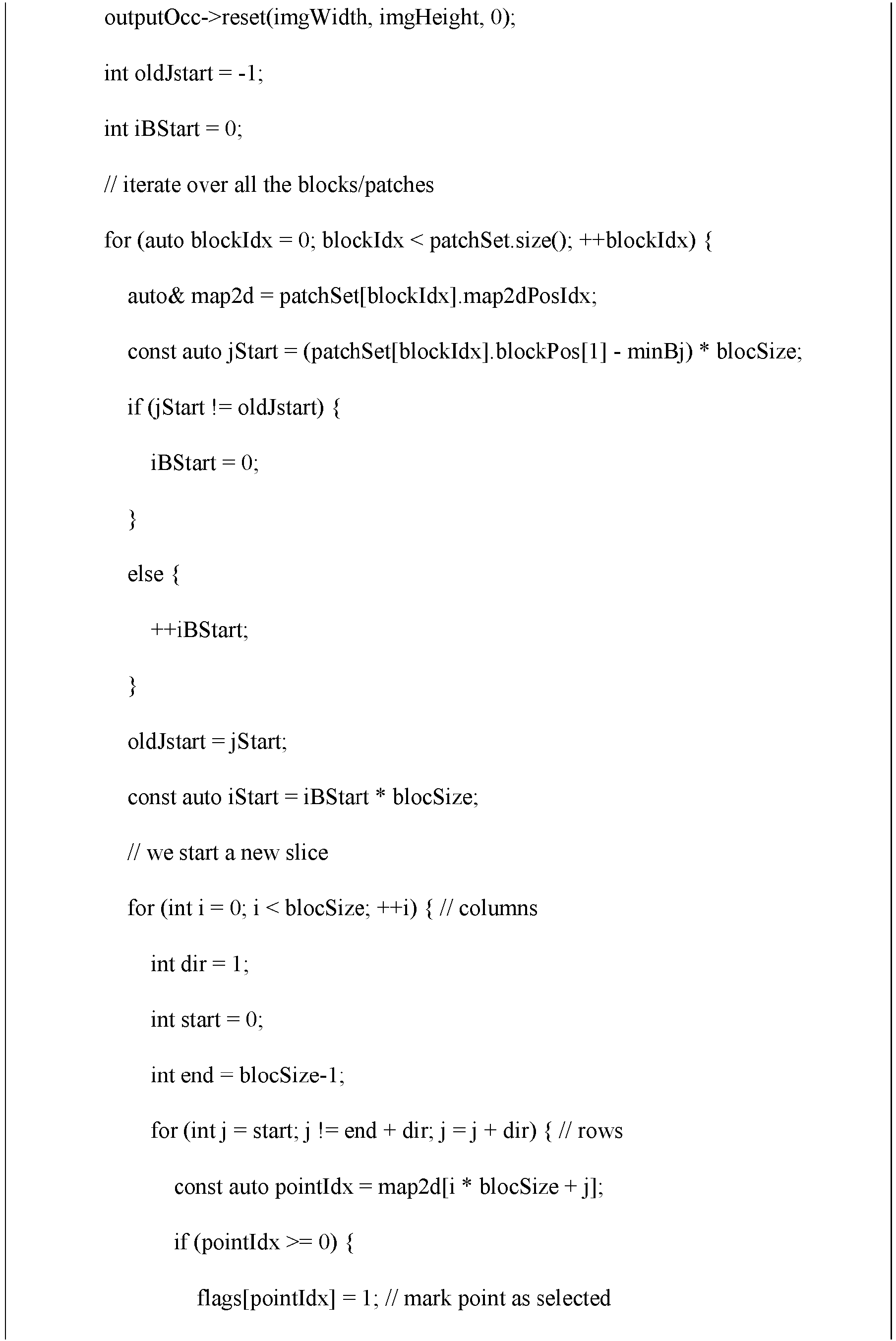

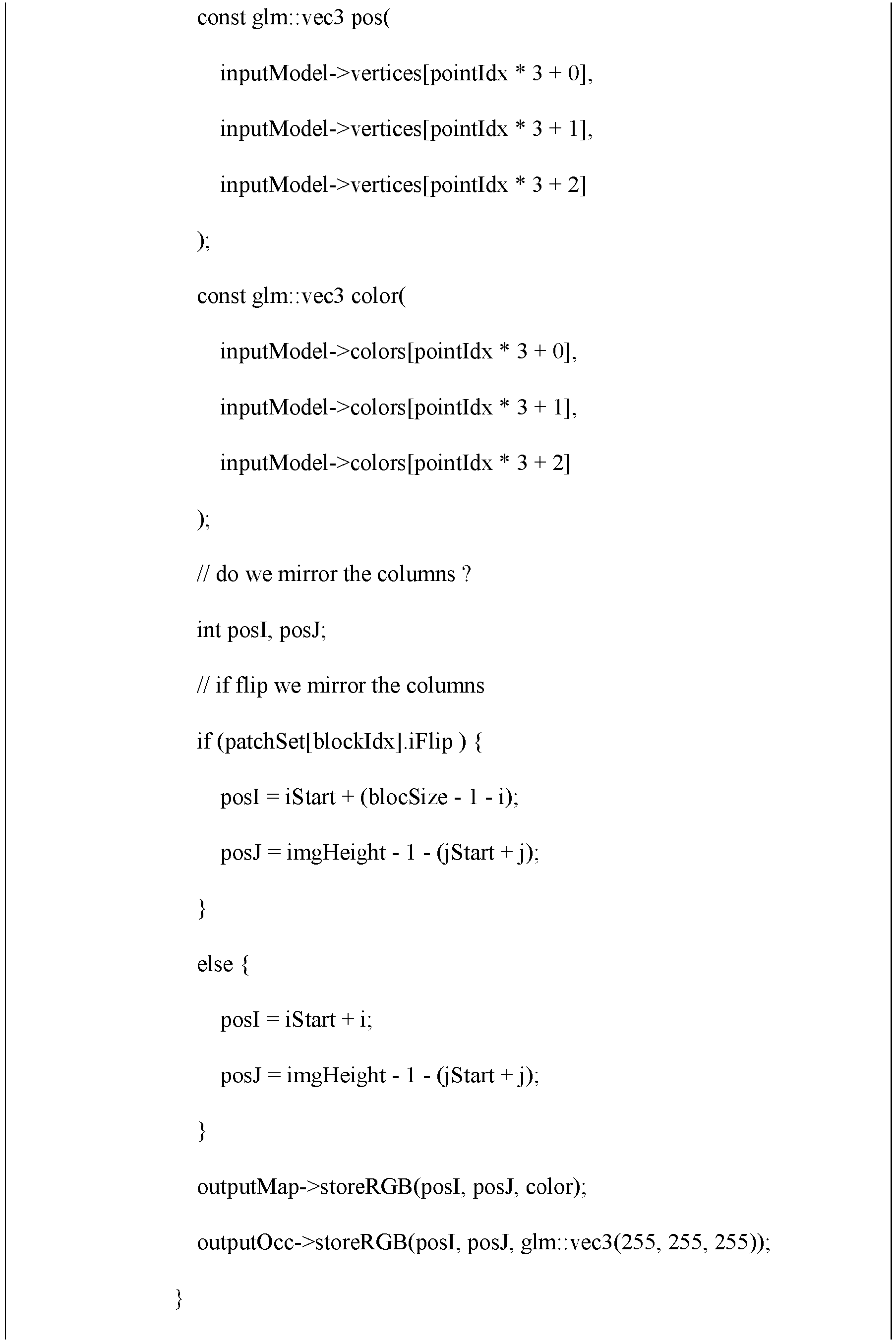

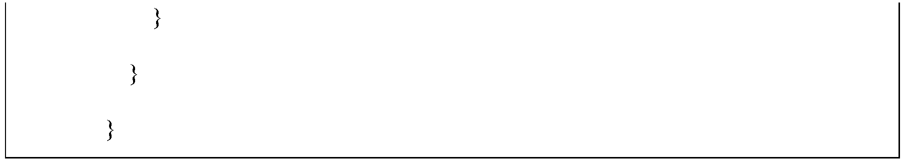

Once the image and occupancy map are generated it is possible to use standard padding methods to fill the black portions of the image. Such a process leads to better predictions by image coders. The goal of this step is to place the 2D images of the patches, in a coherent location/orientation regarding its neighbor patches, inside a larger image that is encoded. The process is performed slice by slice by selecting successions of blocks representing contours of the objects. Each of these blocks may be flipped, so, the sides of the patch images are in correspondence in the atlas image. Heuristics and scanning the blocks of the slice are used for this process. A complete greedy algorithm for unrolling the patches is presented hereafter.

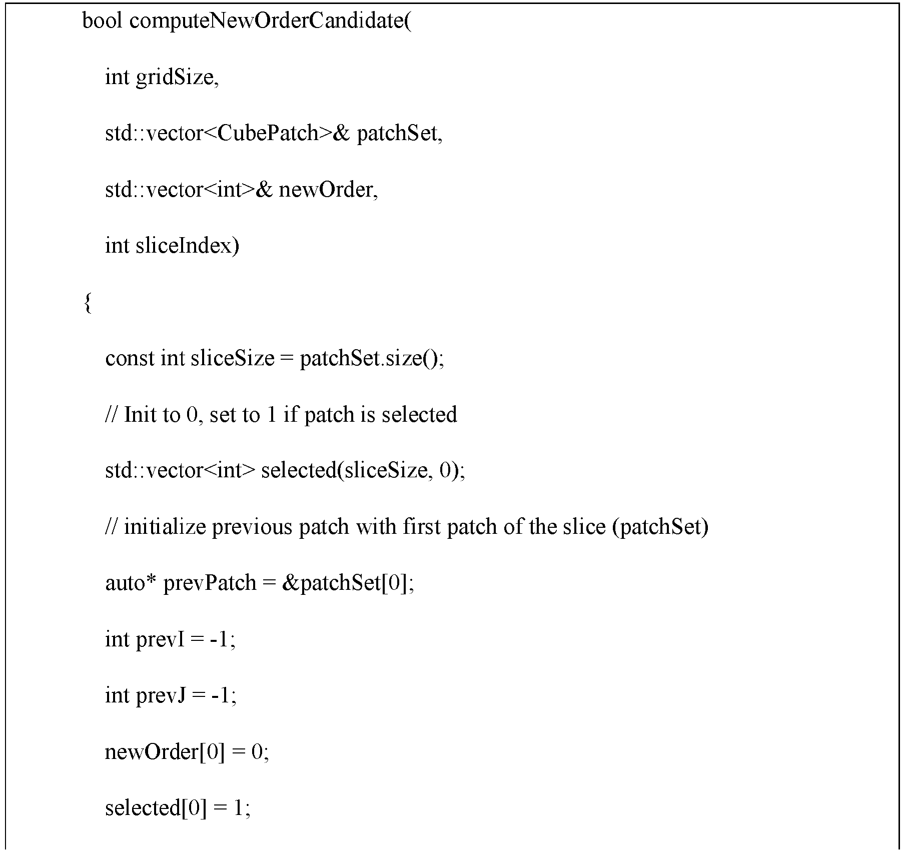

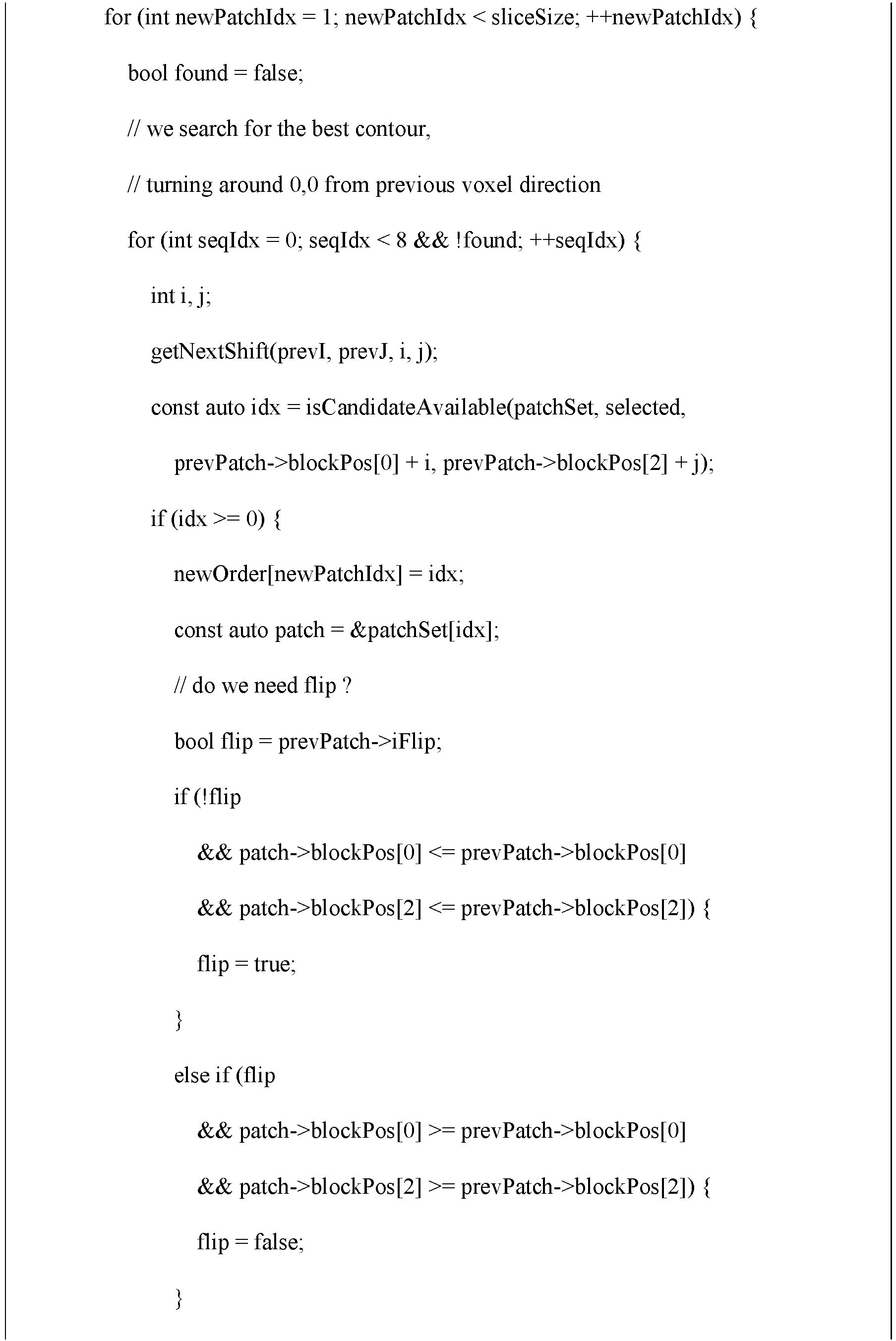

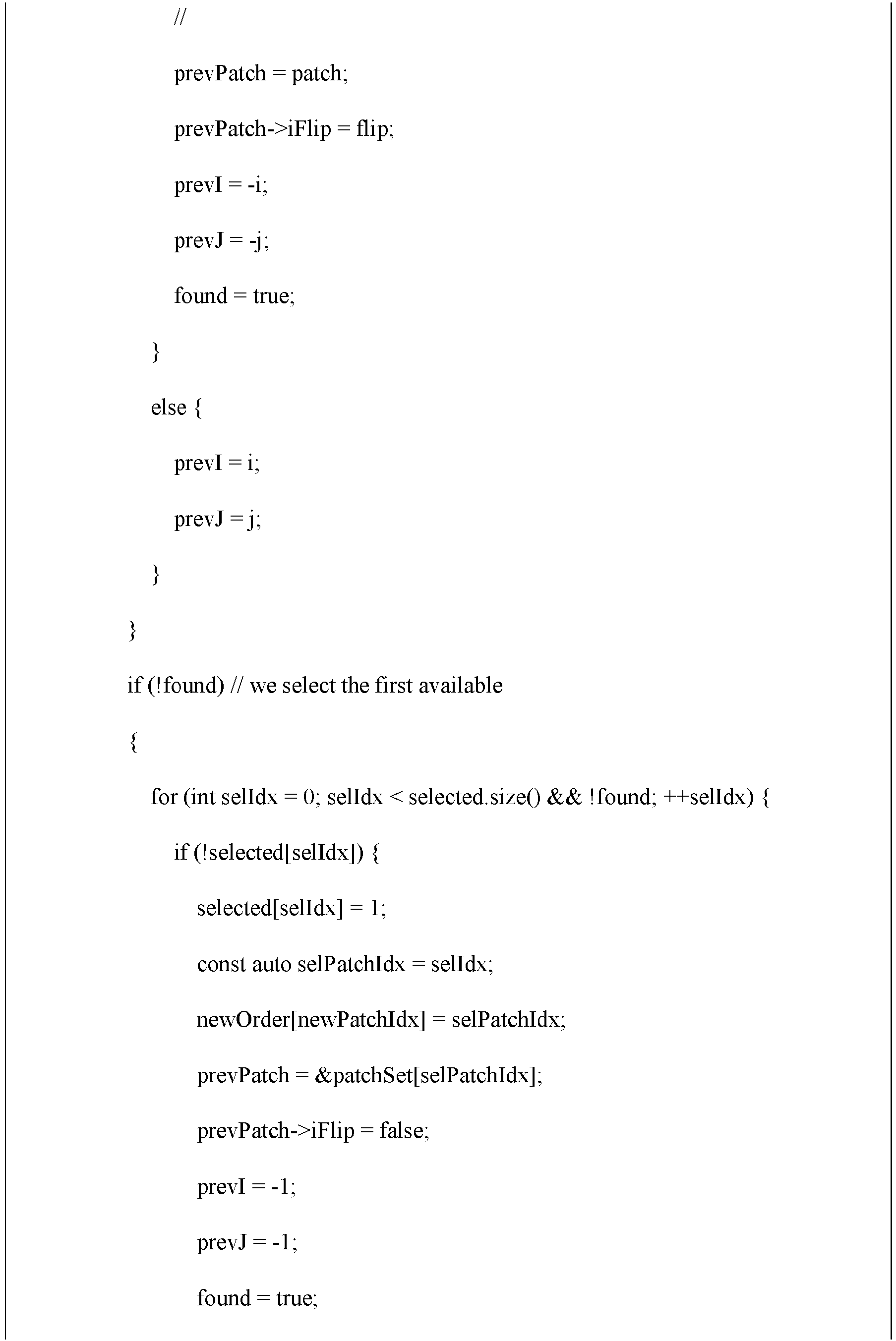

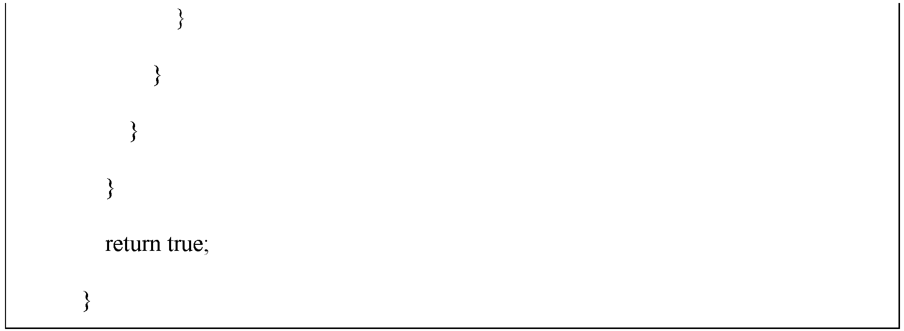

Where the getNextShift procedure is used to search a neighbor block (newI, newJ) in a given order knowing the relative position (i,j), with i and j in {-1,0,1}, of the previously selected block with regard to the current block ( of coordinates 0,0 ). The coordinates are in 2D in the plan of the slice. The getNextShift procedure is defined as:

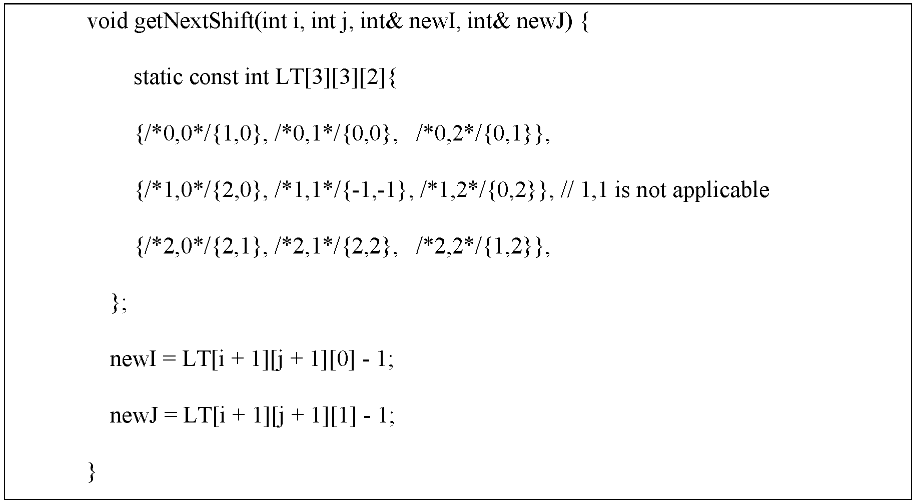

And the procedure isCandidateAvailable is defined as:

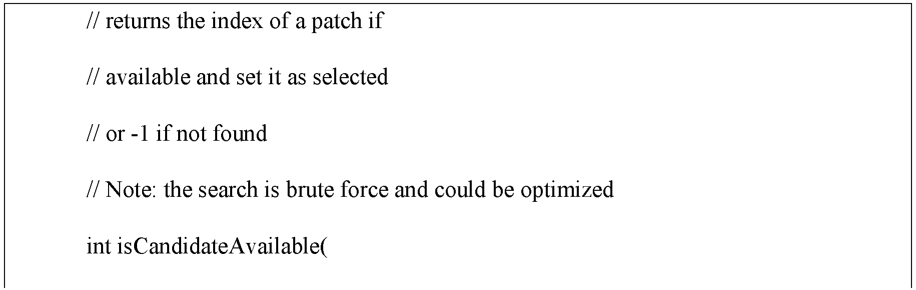

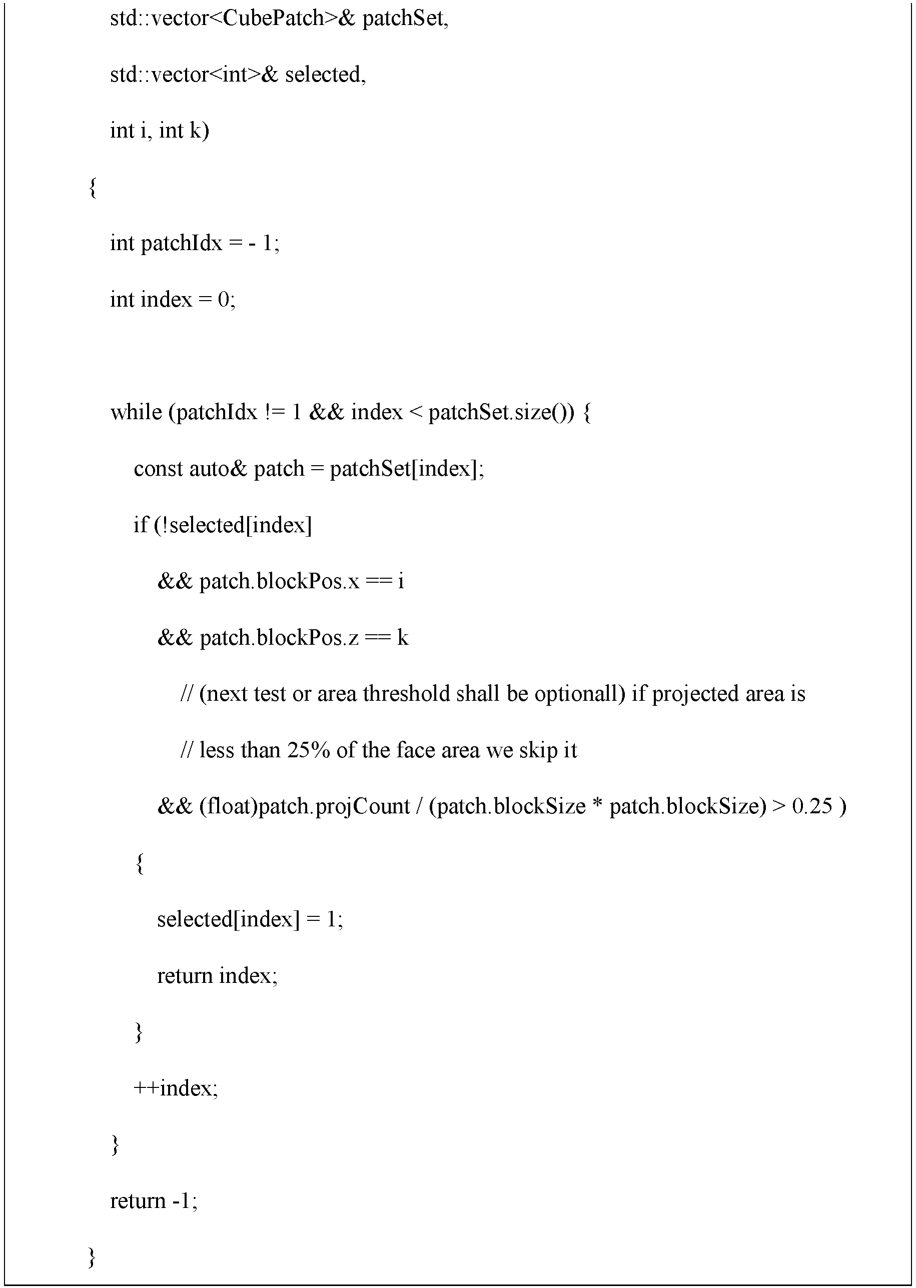

In an embodiment, prediction at encoding, comes at a step 26, after that the attributes of projected points have been encoded at step 24 and decoded at step 25. To predict the attribute of a point that was not projected, its closest projected neighbors are average. The point attributes for which the highest number of neighbors were projected (i.e. with highest prediction degree) are predicted. Once this first round of prediction is done, attributes of remaining points are predicted, this time including already predicted point attributes in addition to the projected ones. The method is decomposed as follows:
1. For each non-projected point, its number of projected neighbors (maximum of 3x3x3-1 values) is computed and stored. At this step, there is no predicted point yet.
2. The color of non-projected and non-predicted points with highest count of projected and predicted neighbor points are interpolated using the colors of those neighbor points. Non-projected/non-predicted neighbors points of these newly predicted points get their counter incremented.
3. Step 2 is iterated until the attributes of all the points are predicted.

At a step 27, the residuals are computed for each predicted point by computing the difference between the original decoded attribute and the predicted attribute. The obtained residuals can be coded by many means, using arithmetic coding (AC) or image/video coding at a step 28. Since values might be negative, they may be shifted by the overall minimum value, which value might be stored in the bitstream for shifting back at decoding. Other shifting methods can be used. Spatial coherence and locality are of interest while coding this kind of 3D localized values (potential neighborhoods similarly may lead to similar residuals). For example, Z-Order and Morton Codes (see Figure 11) to generate 1D (for AC) or 2D (for image/video) orders coding can be used. In the case of AC coding, a new order using a 3D Z-order providing a unique 1D Morton code per voxel (from 3D to 1D). Each voxel (a.k.a. point) of index (i,j,k) then gets a unique index (the Morton code). The residuals are packed in a 1D array by sorting using Morton code associated with their respective 3D point. The 1D array of packed residuals is arithmetically encoded (using one context per color channel). In the case of image/video, a new order using a 3D Z-order providing unique 1D Morton code per voxel (from 3D to 1D) is computed and regenerated a 2D order from this packing which is used to store in the frame to code. Each voxel (point) of index (i,j,k) then gets a unique index (the Morton code). Then, the points of the residuals are packed in a 1D array by sorting using the Morton code associated to their respective 3D point. The residuals of packed points are stored in a 2D array (the image/frame to code) by using the 1D index of each packed residual as a Morton code to generate its 2D position from Z-ordering. The image of packed residuals is encoded using image or video coder, using residuals per attribute channel at step 28.

At decoding, after the buffer of projected attributes is decoded and used to partially reconstruct the colors of the point cloud, the same z-order conversions are performed to find back the position, in 1D buffer or in 2D image, of each non-projected voxel (i.e. block) to reconstruct the attributes by adding the decoded residuals on top of the predictions. Other ordering methods could be considered for the packing, to obtain even more locality, such as using Hilbert curves, for instance.

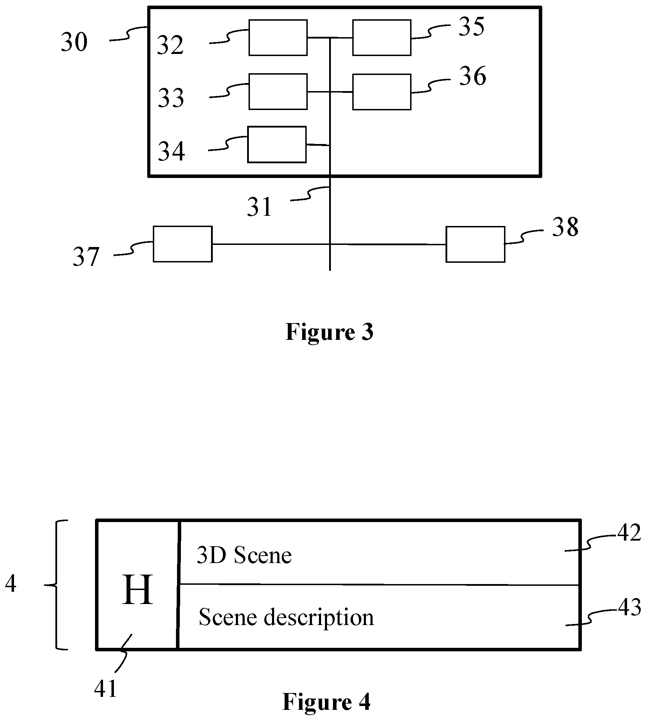

**Figure 3** shows an example architecture of a device 30 which may be configured to implement a method for encoding attributes of a point cloud according to embodiments of the present principles. The device is linked with other devices via their bus 31 and/or via I/O interface 36.

Device 30 comprises following elements that are linked together by a data and address bus 31:D
- a processor 32 (or CPU), which is, for example, a DSP (or Digital Signal Processor);
- a ROM (or Read Only Memory) 33;
- a RAM (or Random Access Memory) 34;
- a storage interface 35;
- an I/O interface 36 for reception of data to transmit, from an application; and
- a power supply (not represented in Figure 2), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 33 comprises at least a program and parameters. The ROM 33 may store algorithms and instructions to perform techniques in accordance with present principles. When switched on, the CPU 32 uploads the program in the RAM and executes the corresponding instructions.

The RAM 34 comprises, in a register, the program executed by the CPU 32 and uploaded after switch-on of the device 30, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 30 is linked, for example via bus 31 to a set of sensors 37 and to a set of rendering devices 38. Sensors 37 may be, for example, cameras, microphones, temperature sensors, Inertial Measurement Units, GPS, hygrometry sensors, IR or UV light sensors or wind sensors. Rendering devices 38 may be, for example, displays, speakers, vibrators, heat, fan, etc.

In accordance with examples, the device 30 is configured to implement a method for encoding attributes of a point cloud, and belongs to a set comprising:
- a mobile device;
- a communication device;
- a game device;
- a tablet (or tablet computer);
- a laptop;
- a still picture camera;
- a video camera.

**Figure 4** shows an example of an embodiment of the syntax of a stream when the data are transmitted over a packet-based transmission protocol. Figure 4 shows an example structure 4 of a stream encoding a 3D point cloud having attributes according to the present principle. The structure consists in a container which organizes the stream in independent elements of syntax. The structure may comprise a header part 41 which is a set of data common to every syntax element of the stream. For example, the header part comprises some of metadata about syntax elements, describing the nature and the role of each of them. The structure comprises a payload comprising an element of syntax 42 and at least one element of syntax 43 (there may be an element of syntax 43 for each attribute of the point cloud for example). Syntax element 42 comprises data representative of the 3D point cloud. It comprises data necessary to render the objects of the 3D scene (e.g. meshes, textures, lighting, etc.). Element of syntax 43 is a part of the payload of the data stream and comprises the scene description. According to the present principles, metadata comprising every information needed for rendering the 3D point cloud with its attributes are encoded, for example, in element of syntax 43.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method for encoding a three-dimensional (3D) point cloud, the method comprising:
- processing the 3D point cloud to obtain a coded geometry, a reconstructed geometry obtained by decoding the coded geometry and adapted attributes;
- dividing the 3D point cloud in a regular grid of blocks, projecting adapted attributes of points of each non-empty block on inner faces of the blocks and selecting one of the inner faces to obtain patches;
- packing the patches in an atlas image according to a scanning process; and
- encoding the atlas image in a data stream with metadata indicating selected inner faces.

2. The method of claim 1 further comprising detecting non-projected adapted attributes, predicting a value for each non-projected adapted attributes and encoding related residuals in the data stream.

3. The method of claim 2, wherein the predicting of the non-projected adapted attributes is based on a decoding of the packed adapted attributes.

4. The method of one of claims 1 to 3, wherein the adapted attributes are obtained by tracking indices of points of the point cloud.

5. The method of one of claims 1 to 3, wherein the adapted attributes are obtained by transferring attributes to the reconstructed geometry.

6. A device for encoding a three-dimensional (3D) point cloud, the device comprising a processor configured for:
- processing the 3D point cloud to obtain a coded geometry, a reconstructed geometry obtained by decoding the coded geometry and adapted attributes;
- dividing the 3D point cloud in a regular grid of blocks, projecting adapted attributes of points of each non-empty block on inner faces of the blocks and selecting one of the inner faces to obtain patches;
- packing the patches in an atlas image according to a scanning process; and
- encoding the atlas image in a data stream with metadata indicating selected inner faces.

7. The device of claim 6, wherein the processor is further configured for detecting non-projected adapted attributes, predicting a value for each non-projected adapted attributes and encoding related residuals in the data stream.

8. The device of claim 7, wherein the predicting of the non-proj ected adapted attributes is based on a decoding of the packed adapted attributes.

9. The device of one of claims 6 to 8, wherein the adapted attributes are obtained by tracking indices of points of the point cloud.

10. The device of one of claims 6 to 8, wherein the adapted attributes are obtained by transferring attributes to the reconstructed geometry.
